(19) Europäisches Patentamt / European Patent Office / Office européen des brevets

(11) **EP 3 677 928 A1**

(12) **DEMANDE DE BREVET EUROPEEN**

(43) Date de publication:
**08.07.2020 Bulletin 2020/28**

(21) Numéro de dépôt: **20150255.6**

(22) Date de dépôt: **03.01.2020**

(51) Int Cl.:
*G01S 7/48* (2006.01)     *G01S 7/486* (2020.01)
*G01S 17/02* (2020.01)     *G01S 17/42* (2006.01)
*G01S 17/88* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **04.01.2019 FR 1900064**

(71) Demandeur: **Transdev Group**
**92130 Issy les Moulineaux (FR)**

(72) Inventeurs:
- **KARAOGUZ, Cem**
  **91120 PALAISEAU (FR)**
- **BEAUVILLAIN, Alexis**
  **91300 MASSY (FR)**

(74) Mandataire: **Lavoix**
**2, place d'Estienne d'Orves**
**75441 Paris Cedex 09 (FR)**

(54) **DISPOSITIF ÉLECTRONIQUE ET PROCÉDÉ DE SURVEILLANCE D'UNE SCÈNE AUTOUR D'UN VÉHICULE AUTOMOBILE, VÉHICULE AUTOMOBILE, SYSTÈME DE TRANSPORT ET PROGRAMME D'ORDINATEUR ASSOCIÉS**

(57)     Ce dispositif électronique (20) de surveillance d'une scène autour d'un véhicule automobile (12, 12A) est destiné à être embarqué dans le véhicule ou à être installé en voirie. Il est apte à être relié à un capteur principal (16) et à au moins un capteur secondaire (18), le capteur principal étant un capteur d'images et chaque capteur secondaire étant distinct du capteur principal.

Ce dispositif comprend un premier module (30) d'acquisition d'au moins une image de la scène, de la part du capteur principal ; un deuxième module (32) d'acquisition d'un ensemble de point(s) de mesure relatif à la scène, de la part de l'au moins un capteur secondaire ; un module (34) de calcul d'une image enrichie de la scène, en superposant à l'image acquise une représentation d'une information additionnelle dépendant de l'ensemble de point(s) ; et un module (36) d'émission de l'image enrichie à un équipement distant (14).

FIG.1

EP 3 677 928 A1

**Description**

La présente invention concerne un dispositif électronique de surveillance d'une scène autour d'un véhicule automobile, le dispositif étant destiné à être embarqué à bord du véhicule automobile et à être relié à un capteur principal et à au moins un capteur secondaire, le capteur principal étant un capteur d'images et chaque capteur secondaire étant distinct du capteur principal.

L'invention se rapporte également à un véhicule automobile, notamment autonome, comprenant un capteur d'image(s) et un tel dispositif électronique de surveillance.

L'invention concerne également un système de transport comprenant une flotte de véhicule(s) automobile(s) et un équipement électronique de supervision à distance de la flotte de véhicule(s) automobile(s), la flotte comportant au moins un tel véhicule et l'équipement électronique distant est configuré pour recevoir au moins une image enrichie de la part de ce véhicule automobile.

L'invention se rapporte également à un procédé de surveillance d'une scène autour d'un tel véhicule automobile, le procédé étant mis en oeuvre par un tel dispositif électronique de surveillance.

L'invention concerne également un programme d'ordinateur comportant des instructions logicielles qui, lorsqu'elles sont exécutées par un ordinateur, mettent en œuvre un tel procédé de surveillance.

L'invention concerne le domaine du pilotage sécurisé de véhicules automobiles, et notamment le domaine du pilotage automatique des véhicules automobiles autonomes.

En effet, dans le domaine du pilotage sécurisé des véhicules automobiles, et notamment dans le pilotage autonome, un des problèmes principaux est l'identification anticipée d'obstacles sur le trajet d'un véhicule en mouvement, permettant de prendre des mesures correctrices pour que le véhicule ne percute pas ces obstacles, ainsi que la transmission d'informations entre chaque véhicule de la flotte et un équipement électronique de supervision à distance de la flotte de véhicule(s) automobile(s).

Les obstacles considérés sont de tout type, par exemple des obstacles fixes, comme des rambardes de sécurité, des véhicules stationnés, ou des obstacles en mouvement, par exemple d'autres véhicules ou des piétons. On comprend qu'il est critique d'éviter toute collision entre un véhicule en mouvement et de tels obstacles, et également d'assurer une bonne transmission d'informations entre chaque véhicule et l'équipement de supervision.

On connait des véhicules automobiles équipés chacun d'un capteur d'images principal, d'un capteur secondaire (par exemple un lidar) et d'un dispositif électronique de surveillance d'une scène autour du véhicule automobile. Le dispositif de surveillance comprend un premier module d'acquisition configuré pour acquérir au moins une image de la scène de la part du capteur principal, un deuxième module d'acquisition configuré pour acquérir un ensemble de point(s) de mesure relatif à la scène de la part du capteur secondaire, et un module d'émission configuré pour émettre à un équipement électronique distant via une liaison de données, d'une part, l'image acquise, et d'autre part, l'ensemble de point(s) de mesure.

Toutefois, la transmission de ces informations entre le véhicule et l'équipement n'est pas toujours satisfaisante, la quantité de données transmissible via la liaison de données étant parfois assez limitée.

Le but de l'invention est de remédier aux inconvénients de l'état de la technique en proposant un dispositif de surveillance plus efficace, notamment en cas de débit limité de données pour la liaison entre le dispositif de surveillance et l'équipement distant.

A cet effet, l'invention a pour objet un dispositif électronique de surveillance d'une scène autour d'un véhicule automobile, le dispositif étant destiné à être embarqué à bord du véhicule automobile ou à être installé en voirie, le dispositif étant apte à être relié à un capteur principal et à au moins un capteur secondaire, le capteur principal étant un capteur d'images et chaque capteur secondaire étant distinct du capteur principal, le dispositif comprenant :

- un premier module d'acquisition configuré pour acquérir au moins une image de la scène, de la part du capteur principal ;
- un deuxième module d'acquisition configuré pour acquérir un ensemble de point(s) de mesure relatif à la scène, de la part de l'au moins un capteur secondaire ;
- un module de calcul configuré pour calculer une image enrichie de la scène, en superposant à l'image acquise une représentation d'au moins une information additionnelle dépendant de l'ensemble de point(s) de mesure ; et
- un module d'émission configuré pour émettre l'image enrichie à un équipement électronique distant via une liaison de données.

Ainsi, avec le dispositif de surveillance selon l'invention, l'ensemble de point(s) de mesure n'est pas émis séparément sur la liaison de données à destination de l'équipement distant, mais est superposé sous forme d'une représentation correspondante à l'image acquise, pour obtenir une image enrichie. Seule l'image enrichie, résultant de cette superposition de l'image acquise et de la représentation, est alors transmise à l'équipement distant.

Autrement dit, le module d'émission du dispositif de surveillance selon l'invention est alors configuré pour émettre l'image enrichie à l'équipement électronique distant via une liaison de données, en l'absence d'une émission séparée de l'image acquise, d'une part, et de l'ensemble de point(s) de mesure acquis, d'autre part.

La quantité de données à émettre via la liaison de données et par le dispositif de surveillance selon l'invention est donc bien moindre qu'avec le dispositif de surveillance de l'état de la technique, ce qui permet alors d'améliorer la qualité de la transmission d'informations entre le dispositif de surveillance et l'équipement distant.

Suivant d'autres aspects avantageux de l'invention, le dispositif électronique de surveillance comprend une ou plusieurs des caractéristiques suivantes, prises isolément ou suivant toutes les combinaisons techniquement possibles :

- l'information additionnelle est une projection de l'ensemble de point(s) de mesure dans le plan de l'image acquise ;
- le capteur secondaire est un capteur multicouches et à balayage autour d'un axe de rotation, configuré pour émettre des signaux depuis plusieurs couches superposées selon son axe de rotation, et la représentation de la projection de l'ensemble de point(s) de mesure est un ensemble de ligne(s), chaque ligne correspondant à des mesures effectuées par une couche ;
- l'information additionnelle est un groupe d'obstacle(s) détecté(s) via l'ensemble de point(s) de mesure ;
- la représentation du groupe d'obstacle(s) est un groupe de frontière(s), chaque frontière correspondant à une délimitation d'un obstacle détecté ;
- la représentation de l'information additionnelle présente une apparence variable en fonction de la distance entre un objet associé à l'information additionnelle représentée et le capteur secondaire ayant acquis l'ensemble de point(s) de mesure correspondant à cette information additionnelle ;

l'apparence étant de préférence une couleur et/ou une forme ;

- au moins un capteur secondaire est installé en voirie et présente une direction de mesure distincte d'un axe de visée du capteur principal, et le deuxième module d'acquisition est configuré pour acquérir, de la part de l'au moins un capteur secondaire installé en voirie, l'ensemble de point(s) selon la direction de mesure distincte de l'axe de visée du capteur principal ;
- chaque capteur secondaire est d'un type distinct de celui du capteur principal ;

le type de chaque capteur secondaire étant de préférence choisi parmi le groupe consistant en : lidar, leddar, radar et capteur à ultrasons ;

- le dispositif électronique de surveillance comprend en outre un module de commutation configuré pour commuter entre un premier mode de fonctionnement dans lequel le module de calcul est activé, l'image envoyée par le module d'émission étant l'image enrichie calculée par le module de calcul et un deuxième mode de fonctionnement dans lequel le module de calcul est désactivé, l'image envoyée par le module d'émission étant alors l'image acquise par le premier module d'acquisition ;
- le module de commutation est commandable à distance par l'équipement électronique distant ;
- l'information additionnelle est une zone libre d'une voie de circulation ;
- la représentation de la zone libre, également appelée zone dégagée, est une frontière délimitant ladite zone libre,

ladite frontière ayant de préférence une apparence distincte de l'apparence de chaque frontière du groupe de frontière(s) représentant un groupe respectif d'obstacle(s) ;

- l'information additionnelle comporte en outre un ou plusieurs indicateurs complémentaires, tels qu'un indice de confiance de la détection d'obstacle(s), une vitesse d'un obstacle respectif détecté ; et
- chaque capteur secondaire est embarqué à bord du véhicule automobile ou installé en voirie.

L'invention a également pour objet un véhicule automobile, notamment autonome, comprenant un capteur d'image(s) et un dispositif électronique de surveillance d'une scène autour du véhicule automobile, le dispositif de surveillance étant tel que défini ci-dessus.

L'invention a également pour objet un système de transport comprenant une flotte de véhicule(s) automobile(s) et un équipement électronique distant, tel qu'un équipement électronique de supervision à distance de la flotte de véhicule(s) automobile(s), au moins un véhicule automobile étant tel que défini ci-dessus, et l'équipement électronique distant est configuré pour recevoir au moins une image enrichie de la part dudit au moins un véhicule automobile

L'invention a également pour objet un procédé de surveillance d'une scène autour d'un véhicule automobile, le procédé étant mis en œuvre par un dispositif électronique de surveillance destiné à être embarqué à bord du véhicule automobile ou à être installé en voirie, le dispositif de surveillance étant apte à être relié à un capteur principal et à au moins un capteur secondaire, le capteur principal étant un capteur d'images et chaque capteur secondaire étant distinct du capteur principal, le procédé comprenant les étapes consistant à :

- acquérir au moins une image de la scène, de la part du capteur principal ;
- acquérir un ensemble de point(s) de mesure relatif à la scène, de la part de l'au moins un capteur secondaire ;
- calculer une image enrichie de la scène, en superposant à l'image acquise une représentation d'au moins une information additionnelle dépendant de l'ensemble de point(s) de mesure ; et
- émettre l'image enrichie à un équipement électronique distant via une liaison de données.

L'invention a également pour objet un programme d'ordinateur comportant des instructions logicielles qui, lorsqu'elles sont exécutées par un ordinateur, mettent en œuvre un procédé de surveillance tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

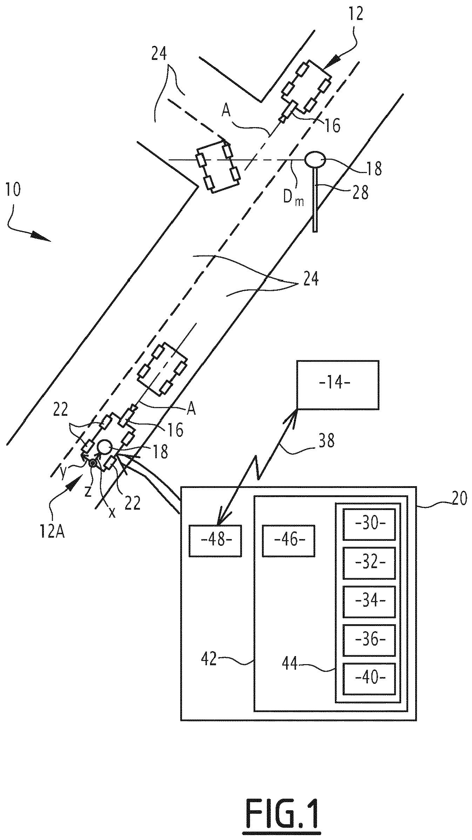

[Fig 1] la figure 1 est une représentation schématique d'un système de transport selon l'invention comprenant une flotte de véhicule(s) automobile(s) et un équipement électronique distant, tel qu'un équipement de supervision à distance de la flotte de véhicule(s) automobile(s) ; au moins un véhicule automobile comprenant un capteur d'image(s) et un dispositif électronique de surveillance d'une scène autour du véhicule, ledit véhicule étant de préférence un véhicule automobile autonome, et l'équipement électronique distant étant configuré pour recevoir au moins une image enrichie de la part dudit au moins un véhicule automobile ;

[Fig 2] [Fig 3] [Fig 4] [Fig 5] les figures 2 à 5 sont des exemples d'image enrichie calculée par un module de calcul inclus dans le dispositif de surveillance, puis émise à l'équipement électronique distant par un module d'émission du dispositif de surveillance ; et

[Fig 6] la figure 6 est un organigramme d'un procédé selon l'invention de surveillance d'une scène autour du véhicule automobile.

Dans la suite de la description, l'expression « sensiblement égal(e) à » désigne une relation d'égalité à plus ou moins 10%, de préférence à plus ou moins 5%. L'expression « sensiblement perpendiculaire » désigne une relation avec un angle de 90° à plus ou moins 10°, de préférence à plus ou moins 5°. L'expression «sensiblement parallèle » désigne une relation avec un angle de 0° à plus ou moins 10°, de préférence à plus ou moins 5°.

Sur la figure 1, un système de transport 10 comprend une flotte de véhicule(s) automobile(s) 12 et un équipement électronique distant 14. Parmi la flotte de véhicule(s) automobile(s) 12, au moins un véhicule automobile 12 est un véhicule automobile autonome et est alors noté 12A. La flotte comporte de préférence une pluralité de véhicules automobiles 12, chaque véhicule automobile étant de préférence un véhicule automobile autonome 12A.

Dans l'exemple de la figure 1, au moins un véhicule automobile 12, notamment un véhicule automobile autonome 12A, comprend un capteur principal 16, au moins un capteur secondaire 18 et un dispositif électronique 20 de surveillance d'une scène autour dudit véhicule. Le dispositif de surveillance 20 est destiné à être embarqué à bord du véhicule automobile 12 et à être relié au capteur principal 16 et à au moins un capteur secondaire 18.

En variante, non représentée, le capteur principal 16, l'au moins un capteur secondaire 18 et le dispositif électronique de surveillance 20 sont chacun installés en voirie, le long de voies de circulation 24. Selon cette variante, le capteur principal 16, l'au moins un capteur secondaire 18 et le dispositif de surveillance 20 sont tous disposés en une unique position géographique, par exemple à l'intérieur d'un unique boitier de protection, non représenté. Alternativement, le capteur principal 16, l'au moins un capteur secondaire 18 et le dispositif de surveillance 20 sont disposés en des positions géographiques distinctes, tout en étant relativement proches, typiquement séparées d'au plus 200 m.

Dans la suite de la description, les termes « avant », « arrière », « droite », « gauche », « haut », « bas », « longitudinal », « transversal » et « vertical » s'entendent par référence au système d'axe orthogonal usuel, associé au véhicule automobile 12, représenté sur la figure 1 et possédant :

- un axe longitudinal X dirigé de l'arrière vers l'avant ;
- un axe transversal Y dirigé de la droite vers la gauche ; et
- un axe vertical Z dirigé du bas vers le haut.

L'homme du métier comprendra alors que chaque véhicule automobile 12, 12A est représenté en vue de dessus sur la vue schématique de la figure 1, les rectangles noirs symbolisant les roues 22 de chaque véhicule automobile 12.

Lorsque le véhicule automobile est un véhicule automobile autonome 12A, il présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

**EP 3 677 928 A1**

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 12A. Selon ce niveau 3, un système de gestion de la conduite autonome, embarqué à bord du véhicule automobile autonome 12A, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 12A, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 12A, effectue la conduite dynamique latérale et longitudinale dans toutes les situations rencontrées par le véhicule automobile autonome 12A, pendant tout son trajet. Aucun conducteur n'est alors requis.

Chaque véhicule automobile 12, 12A est propre à circuler sur une ou plusieurs voies de circulation 24, visibles sur la figure 1.

L'équipement électronique distant 14 est, par exemple, un équipement électronique de supervision apte à superviser à distance, voire à contrôler à distance, la flotte de véhicule(s) automobile(s) 12, l'équipement de supervision étant également appelé PCC (de l'acronyme Poste de Commande Central). L'équipement électronique distant 14 est configuré pour recevoir au moins un image enrichie 26 de la part dudit au moins un véhicule automobile 12 comprenant un dispositif de surveillance 20 respectif.

Chaque capteur principal 16 est un capteur d'image(s) apte à prendre au moins une image d'une scène autour du véhicule automobile 12 qu'il équipe. Chaque capteur principal 16 est destiné à être relié au dispositif électronique de surveillance 20. Chaque capteur principal 16 comporte par exemple un photodétecteur matriciel, apte à prendre des images successives.

Chaque capteur principal 16 présente un axe de visée A. L'axe de visée A est typiquement sensiblement perpendiculaire au photodétecteur matriciel.

Chaque capteur principal 16 est de préférence dirigé vers l'avant par rapport au véhicule automobile 12 qu'il équipe, comme représenté sur la figure 1. En variante, le capteur principal 16 est orienté vers l'arrière par rapport au véhicule automobile 12. Lorsque le capteur principal 16 est dirigé vers l'avant ou vers l'arrière, son axe de visée est typiquement sensiblement parallèle à l'axe longitudinal X. En variante encore, le capteur principal 16 est orienté selon l'axe transversal Y, vers la gauche ou bien vers la droite du véhicule automobile 12.

Chaque capteur secondaire 18 est destiné à être relié au dispositif électronique de surveillance 20. L'homme du métier observera que chaque capteur secondaire 18 n'est néanmoins pas nécessairement destiné à être embarqué à bord du véhicule automobile 12 qui comprend le capteur principal 16.

Dans l'exemple de la figure 1, un capteur secondaire 18 est embarqué à bord du véhicule automobile autonome 12A qui comprend le dispositif électronique de surveillance 20, et un autre capteur secondaire 18 est installé en voirie, le long des voies de circulation 24.

Chaque capteur secondaire 18 installé en voirie est par exemple fixé à un mât vertical 28, comme dans l'exemple de la figure 1, ou encore à un bâtiment. Chaque capteur secondaire 18 installé en voirie présente de préférence une direction de mesure Dm distincte de l'axe de visée A du capteur principal 16.

Chaque capteur secondaire 18 est distinct du capteur principal 16 correspondant. En particulier, chaque capteur secondaire 18 est d'un type distinct de celui du capteur principal 16 correspondant. Le capteur principal 16 est, comme indiqué précédemment, de type capteur d'image(s), c'est-à-dire capteur photo ou caméra. Le type de chaque capteur secondaire 18 est de préférence choisi parmi le groupe consistant en : lidar (de l'anglais *light detection and ranging*), leddar (de l'anglais *light emitting diode detection and ranging*), radar (de l'anglais *radio detection and ranging*) et capteur à ultrasons.

L'homme du métier comprendra alors que chaque capteur secondaire 18 est de préférence configuré pour effectuer une mesure de son environnement afin d'obtenir un ensemble de point(s) de mesure, également appelé nuage de point(s) de mesure, par émission d'une pluralité de signaux de mesure suivant différentes directions d'émission, puis réception de signaux résultant de la réflexion, par l'environnement, des signaux de mesure émis, les signaux de mesure émis étant typiquement des signaux lumineux, radio, ou encore ultrasoniques. L'homme du métier comprendra en outre que, dans ce cas, la direction de mesure Dm du capteur secondaire 18 correspond à une direction moyenne, ou encore une direction médiane, de la pluralité de directions d'émission des signaux de mesure.

En complément facultatif, le capteur secondaire 18 est en outre un capteur multicouches et à balayage autour d'un axe de rotation, configuré pour émettre les signaux de mesure depuis plusieurs couches superposées selon son axe de rotation. Le capteur secondaire 18 est alors dit à balayage car il est apte à balayer des positions angulaires successives autour de l'axe de rotation, et à recevoir, pour chaque position angulaire respective, et en des positions de réception échelonnées selon l'axe de rotation, des signaux réfléchis par l'environnement du capteur secondaire 18, les signaux réfléchis résultant, comme indiqué précédemment, d'une réflexion de l'environnement de signaux préalablement émis par une source d'émission, telle qu'une source laser, radio ou encore à ultrasons, incluse dans le capteur secondaire 18. Pour chaque position angulaire, le capteur secondaire 18 reçoit alors les signaux réfléchis par un objet de l'environnement du capteur secondaire 18, ceci sur plusieurs niveaux selon l'axe de rotation. La disposition des faisceaux du capteur secondaire en plusieurs couches permet au capteur secondaire 18 d'avoir une vue en trois dimensions de l'environnement, également appelée vue 3D.

Dans l'exemple de la figure 1, le capteur secondaire 18 équipant le véhicule automobile autonome 12A est un capteur multicouche et à balayage dont l'axe de rotation s'étend sensiblement selon l'axe vertical Z, tel qu'un LIDAR.

Lorsqu'en variante, le capteur principal 16, l'au moins un capteur secondaire 18 et le dispositif électronique de surveillance 20 sont chacun installés en voirie, ils sont par exemple tous fixés à un unique mât vertical 28, ou encore à un unique bâtiment, ou alternativement fixés à des mâts verticaux 28 et/ou bâtiments distincts.

Le dispositif électronique de surveillance 20 est configuré pour surveiller une scène autour du véhicule automobile 12 à bord duquel il est embarqué. Le dispositif de surveillance 20 comprend un premier module d'acquisition 30 configuré pour acquérir au moins une image de la scène, de la part du capteur principal 16, et un deuxième module d'acquisition 32 configuré pour acquérir un ensemble de point(s) de mesure relatif à la scène, de la part du ou des capteurs secondaires 18 auxquels il est relié.

Selon l'invention, le dispositif de surveillance 20 comprend en outre un module de calcul 34 configuré pour calculer une image enrichie 26 respective de la scène, en superposant à l'image acquise, par le premier module d'acquisition 30, une représentation R d'au moins une information additionnelle dépendant de l'ensemble de point(s) de mesure.

Le dispositif de surveillance 20 comprend en outre un module d'émission 36 configuré pour émettre une image, telle que l'image enrichie 26, à l'équipement électronique distant 14 via une liaison de données 38, telle qu'une liaison sans fil, par exemple une liaison radioélectrique.

En complément facultatif, le dispositif électronique de surveillance 20 comprend en outre un module de commutation 40 configuré pour commuter entre un premier mode de fonctionnement dans lequel le module de calcul 34 est activé, l'image envoyée par le module d'émission 36 étant alors l'image enrichie 26 calculée par le module de calcul 34, et un deuxième mode de fonctionnement dans lequel le module de calcul 34 est désactivé, l'image envoyée par le module d'émission 36 étant alors l'image acquise par le premier module d'acquisition 30. Le module de commutation 40 est de préférence commandable à distance par l'équipement électronique distant 14.

Dans l'exemple de la figure 1, le dispositif électronique de surveillance 20 comprend une unité de traitement d'informations 42 formée par exemple d'une mémoire 44 et d'un processeur 46 associé à la mémoire 44. Le dispositif électronique de surveillance 20 comprend un émetteur-récepteur 48 configuré notamment pour transmettre, par exemple sous forme d'ondes radioélectriques, les données, telles que l'image, émises par le module d'émission 36 à destination de l'équipement électronique distant 14. L'émetteur-récepteur 48 est en complément configuré pour recevoir, en sens inverse, des données de la part de l'équipement électronique distant 14, notamment pour la commande du module de commutation 40 par l'équipement électronique distant 14.

Dans l'exemple de la figure 1, le premier module d'acquisition 30, le deuxième module d'acquisition 32, le module de calcul 34 et le module d'émission 36, ainsi qu'en complément facultatif le module de commutation 40, sont réalisés chacun sous forme d'un logiciel, ou d'une brique logicielle, exécutable par le processeur 46. La mémoire 44 du dispositif électronique de surveillance 20 est alors apte à stocker un premier logiciel d'acquisition configuré pour acquérir, de la part du capteur principal 16, au moins une image de la scène, un deuxième logiciel d'acquisition configuré pour acquérir, de la part de l'au moins un capteur secondaire 18 auquel est relié le dispositif de surveillance 20, un ensemble de point(s) de mesure relatif à la scène, un logiciel de calcul configuré pour calculer l'image enrichie 26 de la scène en superposant à l'image acquise par le premier logiciel d'acquisition, la représentation R d'au moins une information additionnelle dépendant de l'ensemble de point(s) de mesure acquis par le deuxième logiciel d'acquisition, et un logiciel d'émission configuré pour émettre une image, en particulier l'image enrichie 26, à l'équipement électronique distant 14 via la liaison de données 38. En complément facultatif, la mémoire 44 est également apte à stocker un logiciel de commutation configuré pour commuter entre le premier mode de fonctionnement et le deuxième mode de fonctionnement. Le processeur 46 est alors apte à exécuter chacun des logiciels parmi le premier logiciel d'acquisition, le deuxième logiciel d'acquisition, le logiciel de calcul et le logiciel d'émission, ainsi qu'en complément facultatif le logiciel de commutation.

En variante non représentée, le premier module d'acquisition 30, le deuxième module d'acquisition 32, le module de calcul 34 et le module d'émission 36, ainsi qu'en complément facultatif le module de commutation 40, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit*).

Lorsque le dispositif électronique de surveillance 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Dans l'exemple de la figure 1, le premier module d'acquisition 30, le deuxième module d'acquisition 32, le module de calcul 34 et le module d'émission 36 sont embarqués au sein de l'unique unité de traitement d'informations 42, c'est-à-dire au sein d'un même et unique calculateur électronique.

Le premier module d'acquisition 30 est connu en soi, et est configuré pour acquérir, une par une ou bien de manière groupée, des images successives de la scène prises par le capteur principal 16.

Le deuxième module d'acquisition 32 est configuré pour acquérir l'ensemble de point(s) de mesure relatif à la scène, observé de la part du capteur secondaire 18 correspondant, cette acquisition étant effectuée pour chaque position angulaire du capteur secondaire 18 lorsque ce capteur secondaire est un capteur à balayage ou bien de manière groupée à l'issue d'un tour de rotation complet du capteur à balayage.

Lorsque le capteur secondaire 18 est installé en voirie, le deuxième module d'acquisition 32 est configuré pour acquérir, de la part de ce capteur secondaire 18 installé en voirie, l'ensemble de point(s) selon la direction de mesure Dm distincte de l'axe de visée A du capteur principal 16.

Le module de calcul 34 est configuré pour déterminer la représentation R de l'au moins une information additionnelle dépendant de l'ensemble de point(s) de mesure, puis pour superposer ladite représentation R à l'image précédemment acquise par le premier module d'acquisition 30.

L'information additionnelle est par exemple une projection de l'ensemble de points de mesure dans le plan de l'image acquise. Le module de calcul 34 est alors apte à déterminer cette projection du nuage de points dans le plan de l'image acquise par exemple à l'aide de l'équation suivante :

[Math 1]

$$P_C = K_C E_C^L P_L$$

où $P_L$ représente un vecteur, respectivement une matrice, de coordonnées d'un point, respectivement de plusieurs points, dans un référentiel associé au capteur secondaire 18,

$E_C^L$ représente une matrice de transformation depuis le référentiel associé au capteur secondaire 18 vers un référentiel associé au capteur principal 16,

$K_c$ est une matrice de projection associée au capteur principal 16, cette matrice prenant en compte des propriétés intrinsèques du capteur principal 16, telles que sa longueur focale, son point principal, et

$P_c$ est un vecteur, respectivement une matrice, des coordonnées du point, respectivement de plusieurs points, dans le plan de l'image acquise.

Chaque matrice de transformation $E_C^L$ est typiquement obtenue à partir d'un processus de calibration intrinsèque et extrinsèque, tel que décrit par exemple dans l'article « Fast Extrinsic Calibration of a Laser Rangefinder to a Camera » de R. UNNIKRISHNAN et al., publié en 2005.

En complément, un algorithme d'auto-calibration est utilisé lors de la génération ou de la mise à jour de ces matrices, par exemple selon l'équation suivante :

[Math 2]

$$P_{S2} = T_{S2}^{S1} P_{S1}$$

où $T_{S2}^{S1}$ représente une matrice de transformation générale depuis un référentiel associé à un premier capteur S1 vers un référentiel associé à un deuxième capteur S2, la matrice $T_{S2}^{S1}$ incorporant toutes les transformations intermédiaires entre le référentiel du premier capteur S1 et celui du deuxième capteur S2. Dans l'exemple précédent, cette matrice est alors notée $T_C^L$ et est égale au produit de la matrice de projection $K_c$ avec celui de la matrice de transformation $E_C^L$.

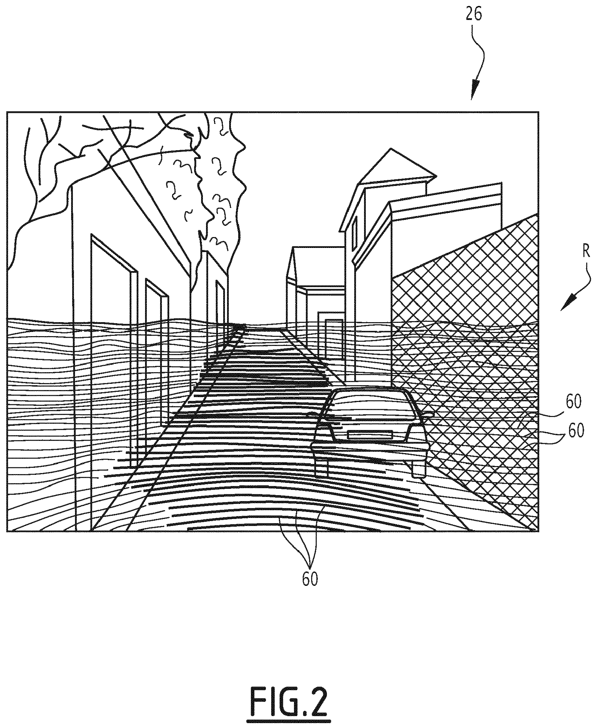

Lorsque le capteur secondaire 18 est en outre un capteur multicouche à balayage, la représentation R de la projection de l'ensemble de point(s) de mesure est un ensemble de ligne(s) 60, chaque ligne 60 correspondant à des mesures effectuées par une couche, comme représenté dans l'exemple de la figure 2.

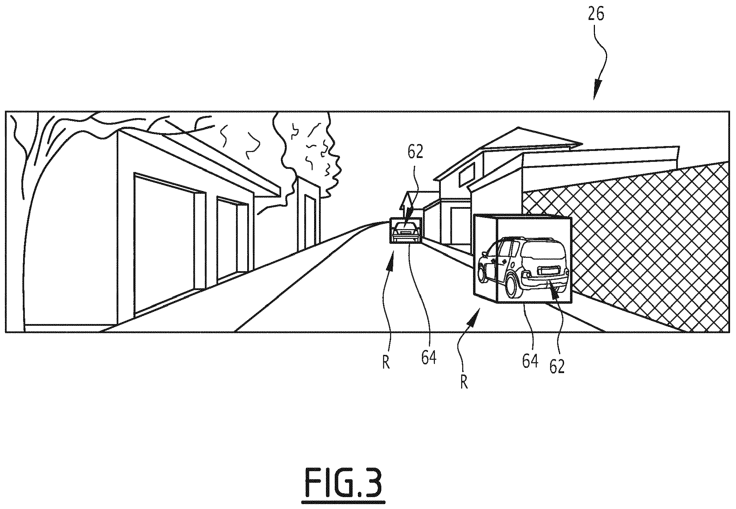

En complément ou en variante, l'information additionnelle est un groupe d'obstacle(s) 62 détecté(s) via l'ensemble de point(s) de mesure, et la représentation R du groupe d'obstacle(s) est alors un groupe de première frontière(s) 64, chaque première frontière 64 correspondant à une délimitation d'un obstacle 62 détecté, comme représenté dans l'exemple de la figure 3.

La première frontière 64 de cette représentation R est par exemple une frontière en trois dimensions, telle qu'un polyèdre, typiquement un parallélépipède rectangle, comme pour l'obstacle 62 au premier plan sur la figure 3. En variante, la première frontière 64 de la représentation R est une frontière en deux dimensions, telle qu'un polygone, typiquement un rectangle, comme pour l'obstacle 62 en arrière-plan sur l'exemple de la figure 3.

Par « obstacle », on entend un objet susceptible de gêner ou d'entraver la circulation du véhicule automobile, ledit objet se trouvant sur la voie de circulation 24 correspondante ou à proximité de celle-ci, ou encore se déplaçant en direction de la voie de circulation 24.

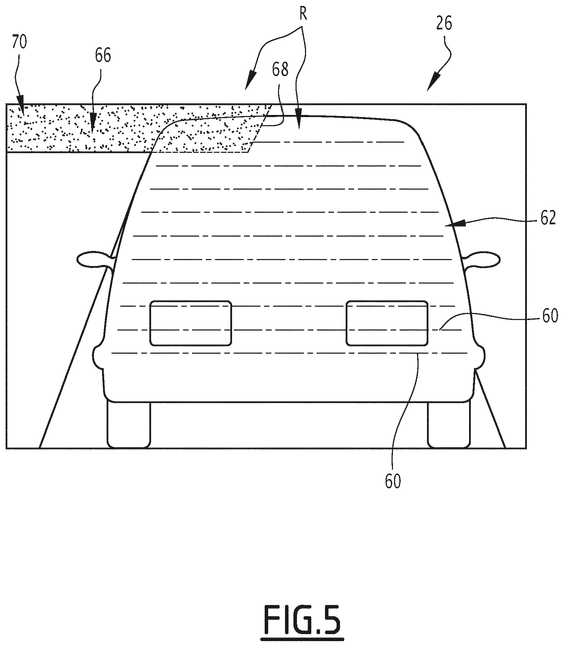

En complément ou en variante, l'information additionnelle est une zone libre 66 d'une voie de circulation 24, et la représentation R de la zone libre 66, également appelée zone dégagée, est par exemple une deuxième frontière 68 délimitant ladite zone libre 66, comme représenté dans l'exemple de la figure 5.

De manière analogue à la première frontière 64 délimitant un obstacle 62, la deuxième frontière 68 délimitant une zone libre 66 respective est par exemple une frontière en trois dimensions, telle qu'un polyèdre, ou encore une frontière en deux dimensions, telle qu'un polygone.

Par « zone libre » d'une voie de circulation, on entend une zone dégagée de la voie de circulation 24, c'est-à-dire une zone, ou portion, de la voie de circulation 24 ne comportant pas d'obstacle et sur laquelle le véhicule automobile 12 peut alors circuler librement.

Afin de faciliter la distinction entre une zone libre 66 et un obstacle 62, la deuxième frontière 68 associée à la zone libre 66 a de préférence une apparence distincte de l'apparence de chaque première frontière 64 du groupe de première(s) frontière(s) représentant un groupe respectif d'obstacle(s) 62.

En complément facultatif, l'information additionnelle comporte en outre un ou plusieurs indicateurs complémentaires, tels qu'un indice de confiance de la détection d'obstacle(s) 62, une vitesse d'un obstacle 62 respectif détecté, ou encore tout autre indicateur relatif à l'obstacle 62 correspondant ou à la zone libre 66 correspondante.

Le module de calcul 34 est alors configuré pour effectuer notamment les opérations suivantes :

- détection du sol ;
- détection, classification et/ ou localisation d'objet(s), tels qu'obstacle(s) 62 et/ou zone(s) libre(s) 66 ;
- calcul de vitesse et/ou de la trajectoire de l'objet, tel qu'un obstacle 62 ou une zone libre 66 ;
- filtrage de points à représenter, par exemple représenter seulement les points ne correspondant pas au sol (orientation non-horizontale) ;
- modification de l'apparence, telle que colorisation, des points de mesure ;
- représentation de frontières englobantes 64, 68 autour des objets 62, 66 ; et
- superposition complémentaire de métadonnées, telles que vitesse de l'objet, classe ou type de l'objet, trajectoire de l'objet, etc.

Pour la superposition de la représentation R à l'image acquise par le premier module d'acquisition, le module de calcul 34 est en complément facultatif configuré pour modifier un indice de transparence, ou encore un indice d'opacité, de la représentation R. Ceci permet alors de rendre plus ou moins visible la portion de l'image acquise à laquelle la représentation R est superposée. L'homme du métier comprendra en effet que la représentation R superposée à l'image acquise occupe seulement une partie de ladite image acquise, ou en d'autres termes présente des dimensions inférieures à celles de l'image acquise.

En complément facultatif, la représentation R de l'information additionnelle présente une apparence variable en fonction de la distance entre un objet, tel que l'obstacle 62 ou la zone libre 66, associé à l'information additionnelle représentée et le capteur secondaire 18 ayant acquis l'ensemble de point(s) de mesure correspondant à cette information additionnelle. L'apparence variant en fonction de ces distances est de préférence une couleur et/ou une forme.

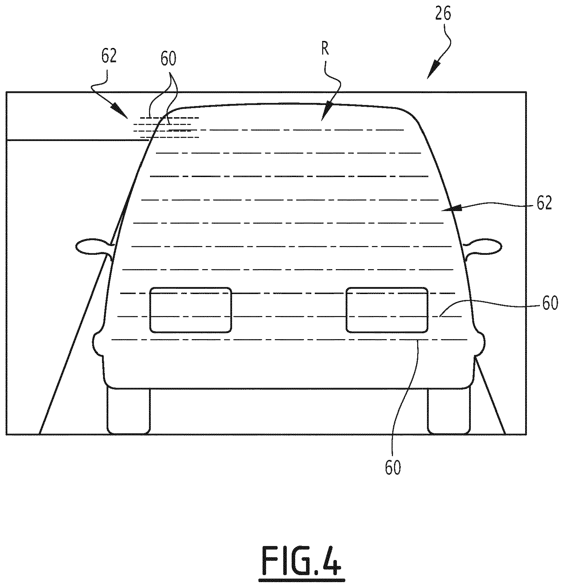

Ce complément facultatif avec l'apparence variable en fonction de la distance est visible dans l'exemple de la figure 4, où la représentation R comporte, d'une part, des lignes 60 en trait discontinu, et d'autre part, d'autres lignes 60 en trait pointillé. Les lignes 60 en trait discontinu correspondent à une première distance associée à un premier obstacle 62, tel qu'un véhicule automobile, se trouvant devant le véhicule automobile 12 embarquant le dispositif de surveillance 20, et les lignes 60 en trait pointillé correspondent à une deuxième distance, supérieure à la première distance et associée à un autre obstacle 62 se trouvant plus loin et au-devant du premier obstacle 62.

L'homme du métier observera en outre que, sur la figure 4, les lignes 60 en trait pointillé, associées à l'autre obstacle 62 se trouvant plus loin, correspondent à un ensemble de point(s) acquis de la part d'un capteur secondaire 18 installé en voirie, et distinct du capteur secondaire 18 embarqué à bord du véhicule automobile 12 ayant permis d'acquérir l'ensemble de point(s) de mesure correspondant aux lignes 60 en trait discontinu, associées au premier obstacle 62.

Ceci permet alors de savoir qu'il y a un autre obstacle 62 se trouvant au-devant du premier obstacle 62 qui précède le véhicule automobile 12 embarquant le dispositif de surveillance 20.

En complément facultatif encore ou en variante, la représentation R de l'information additionnelle présente une apparence variable en fonction de l'orientation de l'objet, tel que l'obstacle 62 ou la zone libre 66, associé à l'information additionnelle représentée. L'exemple de la figure 2 illustre ce complément facultatif de représentations R avec une apparence variable en fonction de l'orientation de l'objet associé à l'information additionnelle représentée, avec des lignes 60 en trait épais correspondant au sol avec une orientation sensiblement horizontale et des lignes 60 en trait fin pour les autres objets ne correspondant pas au sol et ayant une orientation sensiblement verticale.

En complément facultatif encore ou en variante, la représentation R de l'information additionnelle présente une apparence variable en fonction de la hauteur de l'objet, tel que l'obstacle 62 ou la zone libre 66, associé à l'information additionnelle représentée.

Dans l'exemple de la figure 4, l'apparence qui varie est la forme des lignes 60, celle-ci étant d'une part un trait discontinu et d'autre part un trait pointillé, et l'homme du métier comprendra bien entendu que l'apparence variable est en variante une couleur différente entre ces deux ensembles de ligne(s), ou encore à la fois une forme différente et une couleur différente.

L'exemple de la figure 5 illustre un autre exemple de représentations R avec une apparence variable en fonction de la distance entre l'objet associé à l'information additionnelle représentée, telle qu'un obstacle 62 respectif ou une zone libre 66 respective, et le capteur secondaire 18 ayant acquis l'ensemble de point(s) de mesure correspondant à cette information additionnelle. Sur la figure 5, des lignes 60 en trait discontinu sont associées au premier obstacle 62, et correspondent à la première distance précitée, tandis qu'une zone de points 70 est associée à la zone libre 66 délimitée par la deuxième frontière 68, cette zone libre 66 correspondant alors à une deuxième distance, entre la zone libre 66 et le capteur secondaire 18 correspondant, qui est supérieure à la première distance.

L'homme du métier observera en outre que, sur la figure 5, la zone de points 70 associée à la zone libre 66 correspond, comme pour les lignes 60 en trait pointillé sur la figure 4, à un ensemble de point(s) acquis de la part d'un capteur secondaire 18 installé en voirie, et distinct du capteur secondaire 18 embarqué à bord du véhicule automobile 12 ayant permis d'acquérir l'ensemble de point(s) de mesure correspondant aux lignes 60 en trait discontinu, associées à l'obstacle 62 qui précède le véhicule automobile 12 embarquant le dispositif de surveillance 20.

L'homme du métier comprendra en outre que dans les exemples des figures 4 et 5, le capteur secondaire 18 embarqué à bord du véhicule automobile 12 est un capteur multicouche et à balayage, de sorte que la représentation R comporte les lignes 60 précitées, ces lignes 60 représentant la projection de l'ensemble de points de mesure réfléchis par l'obstacle 62 se trouvant devant le véhicule automobile 12. Dans ces exemples des figures 4 et 5, la représentation R associée à l'obstacle 62 est donc en forme de lignes de champ, et ne comporte pas de première frontière 64.

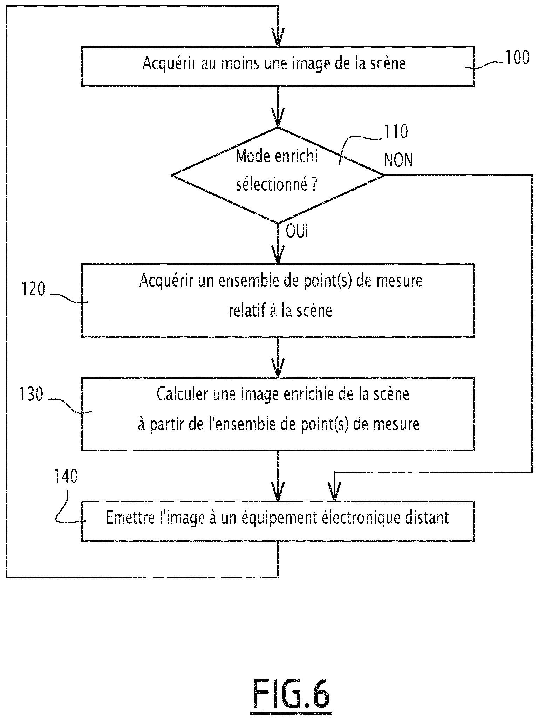

Le fonctionnement du dispositif électronique de surveillance 20 selon l'invention va désormais être expliqué à l'aide de la figure 6 représentant un organigramme du procédé, selon l'invention, de surveillance de la scène autour du véhicule automobile 12 embarquant le dispositif électronique de surveillance 20, le procédé étant mis en œuvre par ledit dispositif de surveillance 20.

Lors d'une étape initiale 100, le dispositif électronique de surveillance 20 acquiert, via son premier module d'acquisition 30 et de la part du capteur principal 16, au moins une image de la scène, cette image ayant été préalablement prise par le capteur principal 16.

Le dispositif de surveillance 20 détermine ensuite lors d'une étape de test 110, si le premier mode de fonctionnement, également appelé mode enrichi, a été sélectionné, ou au contraire si le module de commutation 40 a commuté vers le deuxième mode de fonctionnement correspondant à un mode normal, sans calcul d'image enrichie.

Si le premier mode de fonctionnement (mode enrichi) a été sélectionné, le procédé de surveillance passe alors à l'étape 120 lors de laquelle le dispositif de surveillance acquiert, via son deuxième module d'acquisition 32 et de la part du ou des capteurs secondaires 18 correspondants, un ensemble de point(s) de mesure relatif à la scène, qui a été préalablement observé, c'est-à-dire mesuré, par le ou les capteurs secondaires 18 correspondants.

En variante, non représentée, les étapes d'acquisition 100 et 120 sont effectuées en parallèle l'une de l'autre, afin de faciliter une synchronisation temporelle de l'image avec l'ensemble de point(s) de mesure correspondant à cette image.

Selon cette variante, l'étape d'acquisition 120 est par exemple effectuée avant l'étape de test 110, et en cas d'issue négative au test de l'étape 110, c'est-à-dire si le deuxième mode de fonctionnement a été sélectionné, alors l'ensemble de point(s) de mesure acquis lors de l'étape 120 n'est pas pris en compte, et est par exemple supprimé.

En variante encore, non représentée, l'étape de test 110 est effectuée de manière préliminaire. En cas d'issue positive au test de l'étape 110, c'est-à-dire si le premier mode de fonctionnement (mode enrichi) a été sélectionné, alors les étapes d'acquisition 100 et 120 sont ensuite effectuées en parallèle l'une de l'autre, afin de faciliter une synchronisation temporelle de l'image avec l'ensemble de point(s) de mesure correspondant à cette image. Sinon, en cas d'issue négative au test de l'étape 110, c'est-à-dire si le deuxième mode de fonctionnement a été sélectionné, alors seule l'étape d'acquisition 100 est ensuite effectuée pour acquérir l'image, l'étape d'acquisition 120 n'étant pas effectuée. L'ensemble de point(s) de mesure n'est en effet pas nécessaire dans ce deuxième mode de fonctionnement.

A la suite de cette étape 120 d'acquisition, lors de l'étape 130, le dispositif de surveillance 20 calcule, via son module de calcul 34, l'image enrichie 26 de la scène à partir de l'ensemble de point(s) de mesure. Plus précisément, le module de calcul 34 détermine alors la représentation R de l'au moins une information additionnelle dépendant de l'ensemble de point(s) de mesure, comme décrit précédemment. Il superpose ensuite la représentation R ainsi déterminée, à l'image qui a été préalablement acquise lors de l'étape initiale 100 par le premier module d'acquisition 30.

Le dispositif de surveillance 20 émet enfin, lors de l'étape suivante 140 et via son module d'émission 36, l'image enrichie 26 à l'équipement électronique distant 14 via la liaison de données 38, l'équipement distant 14 étant par exemple l'équipement électronique de supervision permettant de superviser à distance la flotte de véhicule(s) automobile(s) 12, et l'image enrichie 26 permet alors de faciliter la surveillance de la scène autour de chaque véhicule automobile 12 équipé d'un tel dispositif de surveillance 20.

A l'issue de l'étape d'émission 140, le dispositif de surveillance 20 retourne à l'étape initiale 100 pour acquérir une nouvelle image de la scène via son premier module d'acquisition 30.

A l'issue de l'étape de test 110, si le résultat est négatif, c'est-à-dire si le mode de fonctionnement est le deuxième mode de fonctionnement dans lequel le module de calcul 34 est désactivé, le dispositif de surveillance 20 passe directement de l'étape de test 110 à l'étape d'émission 140, et l'image émise par le module d'émission 36 est alors l'image acquise par le premier module d'acquisition 30, puisque le module de calcul 34 n'est alors pas activé pour calculer l'image enrichie 26.

A l'issue de cette étape d'émission 140, le dispositif de surveillance 20 repasse également à l'étape initiale d'acquisition 100 pour acquérir une image suivante de la scène.

Ainsi, le dispositif de surveillance 20 selon l'invention permet de ne pas émettre séparément - sur la liaison de données 38 entre le dispositif de surveillance 20 et l'équipement distant 14 - l'ensemble de point(s) de mesure acquis d'une image acquise de la scène, puisque le module de calcul 34 permet de superposer à l'image acquise la représentation R de l'au moins une information additionnelle en fonction de cet ensemble de point(s) de mesure, pour obtenir une image enrichie 26 respective. Seule l'image enrichie 26, résultant de cette superposition de l'image acquise et de la représentation R, est alors transmise à l'équipement distant 14, ce qui permet de réduire significativement la quantité de données transitant sur ladite liaison de données 38, et offre alors une surveillance de la scène autour du véhicule automobile 12 plus efficace, notamment en cas de débit limité de la liaison de données 38.

En complément facultatif, lorsque la représentation R comporte une ou plusieurs premières frontières 64 associées à des obstacles 62 respectifs et/ou une ou plusieurs deuxièmes frontières 68 associées à des zones libres 66, le calcul, puis l'émission de l'image enrichie 26 selon l'invention, permet d'améliorer encore la surveillance de la scène autour du véhicule automobile 12, puisque cette représentation R fournit en outre une information quant à des obstacles 62 et/ou des zones libres 66 détectés.

En complément facultatif encore, lorsque le capteur secondaire 18 est installé en voirie et a sa direction de mesure Dm distincte de l'axe de visée A du capteur principal 16, le dispositif de surveillance 20 selon l'invention permet alors de détecter d'autres obstacles 62 se trouvant au-devant d'un premier obstacle 62 qui précède immédiatement le véhicule automobile 12, comme illustré dans l'exemple de la figure 4, ce qui permet d'améliorer encore la surveillance de la scène autour du véhicule automobile 12. L'homme du métier comprendra en effet que le véhicule automobile 12 équipé de ses seuls capteurs embarqués ne serait autrement pas en mesure de détecter le ou les obstacles se trouvant au-devant du premier obstacle 62 qui le précède immédiatement.

On conçoit ainsi que le dispositif de surveillance 20 selon l'invention permet d'offrir une surveillance plus efficace de la scène autour du véhicule automobile 12, notamment autour du véhicule automobile autonome 12A.

**Revendications**

1. Dispositif électronique (20) de surveillance d'une scène autour d'un véhicule automobile (12, 12A), le dispositif (20) étant destiné à être embarqué à bord du véhicule automobile (12, 12A) ou à être installé en voirie, le dispositif (20) étant apte à être relié à un capteur principal (16) et à au moins un capteur secondaire (18), le capteur principal (16) étant un capteur d'images et chaque capteur secondaire (18) étant distinct du capteur principal (16), le dispositif (20) comprenant :

- un premier module d'acquisition (30) configuré pour acquérir au moins une image de la scène, de la part du capteur principal (16) ;
- un deuxième module d'acquisition (32) configuré pour acquérir un ensemble de point(s) de mesure relatif à la scène, de la part de l'au moins un capteur secondaire (18) ;

**caractérisé en ce qu'**il comprend en outre :

- un module de calcul (34) configuré pour calculer une image enrichie (26) de la scène, en superposant à l'image acquise une représentation (R) d'au moins une information additionnelle dépendant de l'ensemble de point(s) de mesure ; et
- un module d'émission (36) configuré pour émettre l'image enrichie (26) à un équipement électronique distant (14) via une liaison de données (38).

2. Dispositif (20) selon la revendication 1, dans lequel l'information additionnelle est une projection de l'ensemble de point(s) de mesure dans le plan de l'image acquise.

3. Dispositif (20) selon la revendication 2, dans lequel le capteur secondaire (18) est un capteur multicouches et à balayage autour d'un axe de rotation, configuré pour émettre des signaux depuis plusieurs couches superposées selon son axe de rotation, et la représentation (R) de la projection de l'ensemble de point(s) de mesure est un ensemble de ligne(s) (60), chaque ligne (60) correspondant à des mesures effectuées par une couche.

4. Dispositif (20) selon l'une quelconque des revendications précédentes, dans lequel l'information additionnelle est un groupe d'obstacle(s) (62) détecté(s) via l'ensemble de point(s) de mesure.

5. Dispositif (20) selon la revendication 4, dans lequel la représentation (R) du groupe d'obstacle(s) (62) est un groupe de frontière(s) (64), chaque frontière (64) correspondant à une délimitation d'un obstacle (62) détecté.

6. Dispositif (20) selon l'une quelconque des revendications précédentes, dans lequel la représentation (R) de l'information additionnelle présente une apparence variable en fonction de la distance entre un objet (62, 66) associé à l'information additionnelle représentée et le capteur secondaire (18) ayant acquis l'ensemble de point(s) de mesure correspondant à cette information additionnelle ;
l'apparence étant de préférence une couleur et/ou une forme.

7. Dispositif (20) selon l'une quelconque des revendications précédentes, dans lequel au moins un capteur secondaire (18) est installé en voirie et présente une direction de mesure (Dm) distincte d'un axe de visée (A) du capteur principal (16), et le deuxième module d'acquisition est configuré pour acquérir, de la part de l'au moins un capteur secondaire (18) installé en voirie, l'ensemble de point(s) selon la direction de mesure (Dm) distincte de l'axe de visée (A) du capteur principal (16).

8. Dispositif (20) selon l'une quelconque des revendications précédentes, dans lequel chaque capteur secondaire (18) est d'un type distinct de celui du capteur principal (16) ;
le type de chaque capteur secondaire (18) étant de préférence choisi parmi le groupe consistant en : lidar, leddar, radar et capteur à ultrasons.

9. Véhicule automobile (12, 12A), notamment autonome (12A), comprenant un capteur d'image(s) et un dispositif électronique (20) de surveillance d'une scène autour du véhicule automobile (12, 12A), **caractérisé en ce que** le dispositif de surveillance (20) est selon l'une quelconque des revendications précédentes.

10. Système de transport (10) comprenant une flotte de véhicule(s) automobile(s) (12, 12A) et un équipement électronique distant (14), tel qu'un équipement électronique de supervision à distance de la flotte de véhicule(s) automobile(s) (12, 12A),
**caractérisé en ce qu'**au moins un véhicule automobile (12) est selon la revendication précédente, et l'équipement électronique distant (14) est configuré pour recevoir au moins une image enrichie (26) de la part dudit au moins un véhicule automobile (12, 12A).

11. Procédé de surveillance d'une scène autour d'un véhicule automobile (12, 12A), le procédé étant mis en œuvre par un dispositif électronique de surveillance (20) destiné à être embarqué à bord du véhicule automobile (12, 12A) ou à être installé en voirie, le dispositif de surveillance (20) étant apte à être relié à un capteur principal (16) et à au moins un capteur secondaire (18), le capteur principal (16) étant un capteur d'images et chaque capteur secondaire (18) étant distinct du capteur principal (16), le procédé comprenant les étapes consistant à :

- acquérir (100) au moins une image de la scène, de la part du capteur principal (16) ;
- acquérir (120) un ensemble de point(s) de mesure relatif à la scène, de la part de l'au moins un capteur secondaire (18) ;

**caractérisé en ce qu'**il comprend en outre les étapes consistant à :

- calculer (130) une image enrichie (26) de la scène, en superposant à l'image acquise une représentation (R) d'au moins une information additionnelle dépendant de l'ensemble de point(s) de mesure ; et
- émettre (140) l'image enrichie (26) à un équipement électronique distant (14) via une liaison de données (38).

12. Programme d'ordinateur comportant des instructions logicielles qui, lorsqu'elles sont exécutées par un ordinateur, mettent en œuvre un procédé de surveillance selon la revendication précédente.

## FIG.1

## FIG.2

FIG.3

FIG.4

16

**FIG.5**

Acquérir au moins une image de la scène    100

Mode enrichi
sélectionné ?    110
NON

OUI

Acquérir un ensemble de point(s) de mesure
relatif à la scène    120

Calculer une image enrichie de la scène
à partir de l'ensemble de point(s) de mesure    130

140
Emettre l'image à un équipement électronique distant

## FIG.6

Europäisches
Patentamt

European
Patent Office

Office européen
des brevets

# RAPPORT DE RECHERCHE EUROPEENNE

Numéro de la demande

EP 20 15 0255

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/005050 A1 (BROWNING BRETT [US] ET AL) 4 janvier 2018 (2018-01-04)<br>* abrégé; figures 1-4,11 *<br>* alinéas [0079] - [0083] *<br>* alinéa [0087] *<br>* alinéas [0164] - [0168] *<br>* alinéa [0170] *<br>----- | 1-12 | INV.<br>G01S7/48<br>G01S7/486<br>G01S17/02<br>G01S17/42<br>G01S17/88 |
| A | WO 2017/196165 A1 (DAF TRUCKS NV [NL]) 16 novembre 2017 (2017-11-16)<br>* abrégé; figures 1,3,4 *<br>* page 6, ligne 21 - page 7, ligne 14 *<br>----- | 1-12 | |
| A | US 2010/026555 A1 (WHITTAKER WILLIAM L [US] ET AL) 4 février 2010 (2010-02-04)<br>* abrégé; figures 1,2 *<br>* alinéa [0054] *<br>----- | 1-12 | |
| A | US 2018/202822 A1 (DELIZIO ANDREW [US]) 19 juillet 2018 (2018-07-19)<br>* abrégé; figure 1- *<br>* page 2, alinéa 57 - page 3, alinéa 62 *<br>----- | 1-12 | DOMAINES TECHNIQUES RECHERCHES (IPC)<br><br>G01S<br>G05D |

Le présent rapport a été établi pour toutes les revendications

| Lieu de la recherche | Date d'achèvement de la recherche | Examinateur |
|---|---|---|
| Munich | 21 février 2020 | Cordeiro, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 15 0255

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-02-2020

| Document brevet cité au rapport de recherche | Date de publication | Membre(s) de la famille de brevet(s) | Date de publication |
|---|---|---|---|
| US 2018005050 A1 | 04-01-2018 | AU 2017290902 A1 | 31-01-2019 |
| | | BR 112018077539 A2 | 09-04-2019 |
| | | CA 3029742 A1 | 04-01-2018 |
| | | EP 3469307 A2 | 17-04-2019 |
| | | US 2018003511 A1 | 04-01-2018 |
| | | US 2018004225 A1 | 04-01-2018 |
| | | US 2018004226 A1 | 04-01-2018 |
| | | US 2018004227 A1 | 04-01-2018 |
| | | US 2018005050 A1 | 04-01-2018 |
| | | US 2018005052 A1 | 04-01-2018 |
| | | US 2018005053 A1 | 04-01-2018 |
| | | US 2018005407 A1 | 04-01-2018 |
| WO 2017196165 A1 | 16-11-2017 | BR 112018073122 A2 | 06-03-2019 |
| | | EP 3455690 A1 | 20-03-2019 |
| | | WO 2017196165 A1 | 16-11-2017 |
| US 2010026555 A1 | 04-02-2010 | US 2008059007 A1 | 06-03-2008 |
| | | US 2008059015 A1 | 06-03-2008 |
| | | US 2010026555 A1 | 04-02-2010 |
| | | WO 2007143756 A2 | 13-12-2007 |
| | | WO 2007143757 A2 | 13-12-2007 |
| | | WO 2008070205 A2 | 12-06-2008 |
| US 2018202822 A1 | 19-07-2018 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. UNNIKRISHNAN et al.** *Fast Extrinsic Calibration of a Laser Rangefinder to a Camera,* 2005